# EUROPEAN PATENT APPLICATION

(11) **EP 4 398 412 A1**
(43) Date of publication of application: **10.07.2024**
(21) Application number: 23855777.1
(22) Date of filing: 15.05.2023
(51) Int. Cl.: H01M 50/581, H01M 50/204, H01M 50/233

(54) **BATTERY CORE MODULE**

(30) Priority: 25.11.2022 KR 20220160260; 09.05.2023 KR 20230059816
(71) Applicant: LG ENERGY SOLUTION, LTD., Seoul 07335 (KR)
(72) Inventor: HUANG, Chien-Pin, 11494 (TW)
(74) Representative: Goddar, Heinz J.
(86) International application number: PCT/KR2023/006553
(87) International publication number: WO 2024/111767

(57) **Abstract**

Disclosed is a battery module, which includes a battery unit and an anti-collision structure. The battery unit a battery body, a first electrode, a second electrode and a thermal cut-off. The battery body has an end portion. The first electrode, the second electrode and the thermal cut-off are disposed at the end portion. The thermal cut-off is connected to the first electrode. The anti-collision structure includes a first sheet and a second sheet. The end portion, a part of the first electrode, a part of the second electrode and the thermal cut-off are installed between the first sheet and the second sheet. The first sheet and the second sheet are clamped and fixed to each other.

## Description

### TECHNICAL FIELD

The present disclosure relates to a battery core module, more particularly, to a battery core module including a thermal cut-off. The present application claims priority to Korean Patent Application No. 10-2022-0160260 filed on November 25, 2022 in the Republic of Korea and Korean Patent Application No. 10-2023-0059816 filed on May 9, 2023 in the Republic of Korea, the disclosures of which are incorporated herein by reference.

### BACKGROUND ART

Battery assemblies of electronic products (e.g. laptops, tablets, etc.) typically have a built-in battery core module. In order to pass the electronic product shock/drop test, the positive electrode, the negative electrode, and the thermal cut-off at the end portion of the battery core module must be cushioned and protected. In the conventional electronic product, the positive electrode and the negative electrode are covered with an insulating paper, the thermal cut-off and the positive electrode adjacent to the thermal cut-off are protected using a foam. However, this method makes it difficult to protect the negative electrode with the foam, and assembling is cumbersome and inconvenient.

### DISCLOSURE

### Technical Problem

The present disclosure is directed to providing a battery core module, which may effectively protect a positive electrode, a negative electrode, and a thermal cut-off through a simple structure.

### Technical Solution

In one aspect of the present disclosure, there is provided a battery core module, comprising: a battery unit including a battery body, a first electrode, a second electrode and a thermal cut-off, wherein the battery body has an end portion, wherein the first electrode, the second electrode and the thermal cut-off are disposed at the end portion, and wherein the thermal cut-off is connected to the first electrode, and an anti-collision structure including a first sheet and a second sheet, wherein the end portion, a part of the first electrode, a part of the second electrode and the thermal cut-off are installed between the first sheet and the second sheet, and wherein the first sheet and the second sheet are clamped and fixed to each other.

In an embodiment of the present disclosure, the first sheet may have a bent portion to form an accommodation space, and the thermal cut-off may be located within the accommodation space.

In an embodiment of the present disclosure, the first sheet and the second sheet may be made of an insulating material.

In an embodiment of the present disclosure, the first sheet may have at least one clamping hole, the second sheet may have at least one clamping pillar, and the at least one clamping pillar may be clamped and fixed to the at least one clamping hole.

In an embodiment of the present disclosure, the first electrode may include a first conductive element and a second conductive element, the first conductive element may be connected between one end of the thermal cut-off and the battery body, the second conductive element may be connected to the other end of the thermal cut-off, and a part of the first conductive element and a part of the second conductive element may be installed between the first sheet and the second sheet.

In an embodiment of the present disclosure, the first conductive element may be bent and extends onto the first sheet.

The first sheet may be made of TPU (Thermoplastic Polyurethane).

The first conductive element may be bent to extend onto the first sheet based on a side surface of the first sheet.

A front end of the clamping pillar may have an inclined shape.

### Advantageous Effects

According to the above, the battery core module of the present disclosure uses a first sheet and a second sheet that are clamped to each other so that a first electrode, a second electrode, and a thermal cut-off are disposed therebetween. By doing so, the first electrode, the second electrode, and the thermal cut-off may be effectively protected. Also, since the first sheet and the second sheet are clamped to each other and then fixed to the end portion by the clamping force on the end portion of the battery core module, assembling is very simple.

### DESCRIPTION OF DRAWINGS

FIG. 1 is a partial perspective view showing a battery core module according to an embodiment of the present disclosure.
FIG. 2 is a partial front view showing the battery core module in FIG. 1.
FIG. 3 shows a first conductive element in FIG. 1 in an unbent state.
FIG. 4 is a partial top view showing some elements of the battery core module in FIG. 3.
FIG. 5 is a partial enlarged view showing an anti-collision structure in FIG. 2.
FIG. 6 is a cross-sectional view showing the anti-collision structure in FIG. 5.

### BEST MODE

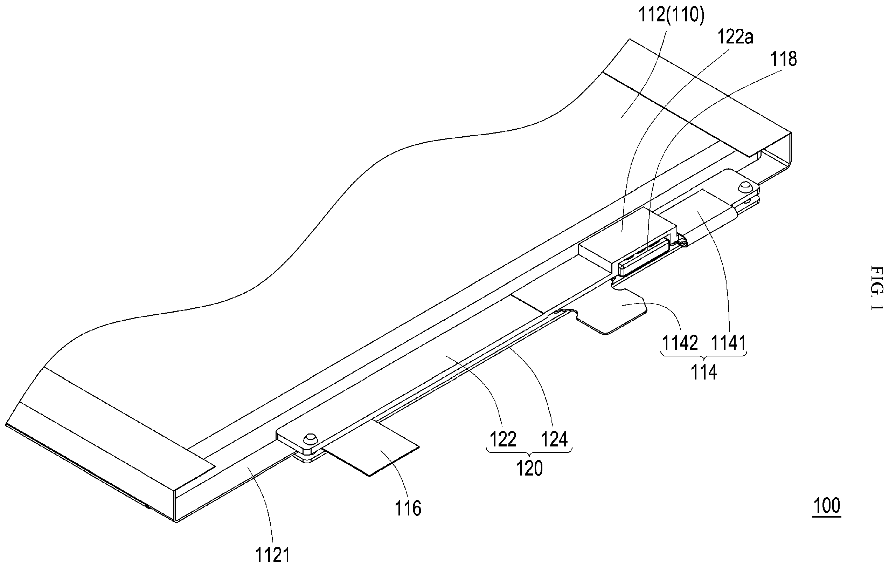

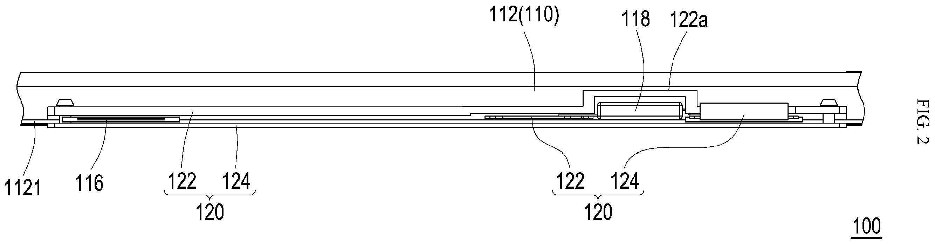

FIG. 1 is a partial perspective view showing a battery core module according to an embodiment of the present disclosure. FIG. 2 is a partial front view showing the battery core module in FIG. 1. Referring to FIGS. 1 and 2, the battery core module 100 according to this embodiment includes a battery unit 110 and an anti-collision structure 120. The battery unit 110 includes a battery body 112, a first electrode 114 (e.g., a positive electrode), a second electrode 116 (e.g., a negative electrode), and a thermal cut-off (TCO) 118. The battery body 112 has an end portion 1121, and the first electrode 114, the second electrode 116, and the thermal cut-off 118 are disposed at the end portion 1121, and the thermal cut-off 118 is connected to the first electrode 114.

The anti-collision structure 120 includes a first sheet 122 and a second sheet 124. The end portion 1121 of the battery body 112, a part of the first electrode 114, a part of the second electrode 116, and the thermal cut-off 118 are installed between the first sheet 122 and the second sheet 124, and the first sheet 122 and the second sheet 124 are clamped and fixed to each other..

As described above, the battery core module 100 according to this embodiment uses the first sheet 122 and the second sheet 124 clamped to each other, so that the first electrode 114, the second electrode 116, and the thermal cut-off 118 are installed therebetween. Thereby, the first electrode 114, the second electrode 116 and the thermal cut-off 118 are preferably protected, and the first sheet 122 and the second sheet 124 are clamped to each other and then fixed to the end portion 1121 of the battery core module 100 by a clamping force onto the end portion 1121, so assembling is very simple.

In this embodiment, the first sheet 122 has a bent portion 122a to form an accommodation space, and the thermal cut-off 118 is located within the accommodation space. The first sheet 122 and the second sheet 124 is made of, for example, an insulating material such as plastic. For example, the first sheet 122 and/or the second sheet 124 are made of TPU (Thermoplastic Polyurethane). Meanwhile, the first sheet 122 may be made of TPU and the second sheet 124 may be made of a plastic other than TPU. Since TPU is a plastic with the elasticity of rubber, when the first sheet 122 is made of TPU, the first sheet 122 may be pressed and clamped to the second sheet 124 more conveniently.

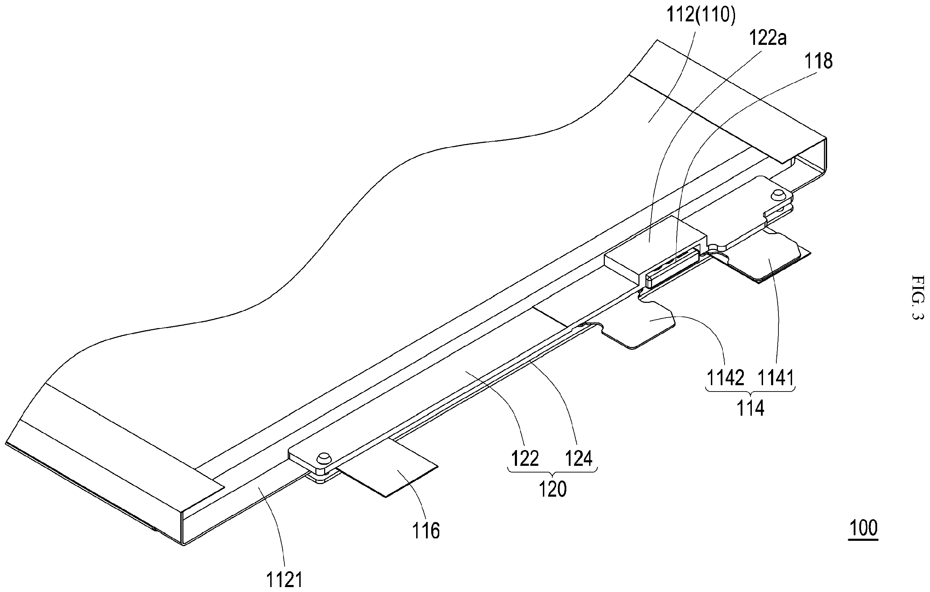

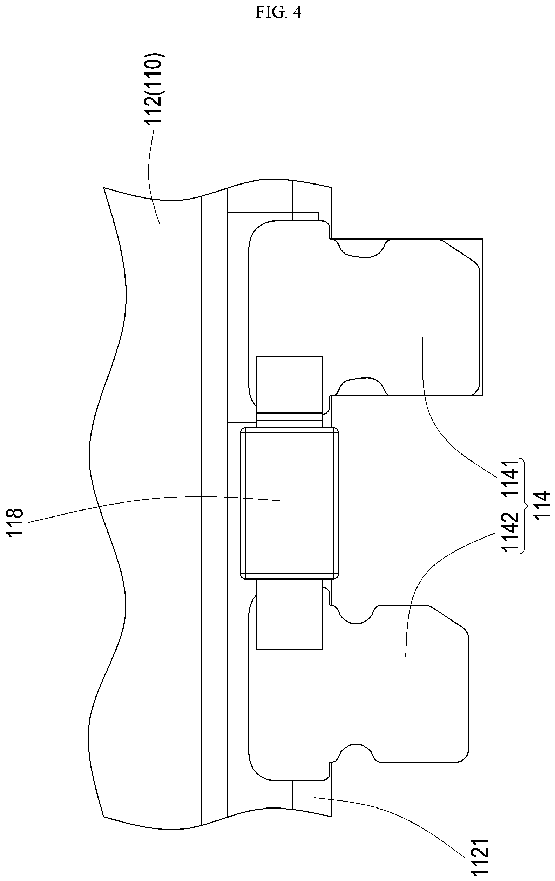

FIG. 3 shows a first conductive element in FIG. 1 in an unbent state. FIG. 4 is a partial top view showing some elements of the battery core module in FIG. 3. Referring to FIGS. 1 to 4, the first electrode 114 according to this embodiment includes a first conductive element 1141 and a second conductive element 1142. The first conductive element 1141 is connected between one end of the thermal cut-off 118 and the battery body 112, and the first conductive element 1141 is connected to the battery body 112 through welding or the like. The second conductive element 1142 is connected to the other end of the thermal cut-off 118. A part of the first conductive element 1141 and a part of the second conductive element 1142 are installed between the first sheet 122 and the second sheet 124. As shown in FIG. 1, the first conductive element 1141 is bent and extends onto the first sheet 122. When the battery core module 100 is installed in an electronic product, the battery core module 100 is connected to a corresponding PCB in the electronic product through the second conductive element 1142 and the second electrode 116. The first conductive element 1141 is installed between the first sheet 122 and the second sheet 124 in an unbent state, and may be bent to extend onto the first sheet 122 after welding. When bent, the first conductive element 1141 may be bent based on the side surface of the first sheet 122. In other words, the first conductive element 1141 may be bent at a portion where the side surface of the first sheet 122 and the first conductive element 1141 are aligned, thereby allowing more accurate and safer bending.

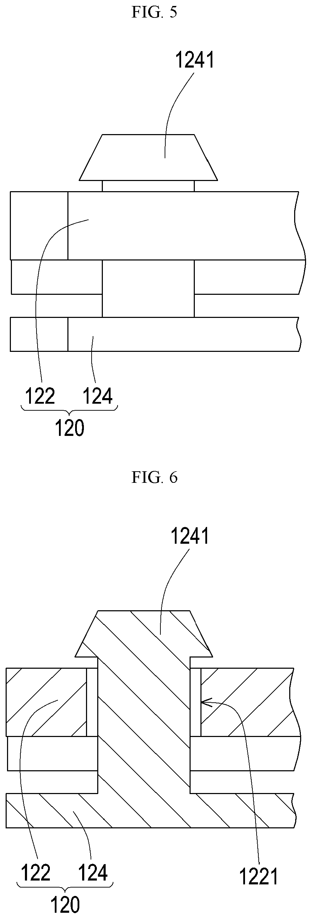

FIG. 5 is a partial enlarged view showing an anti-collision structure in FIG. 2. FIG. 6 is a cross-sectional view showing the anti-collision structure in FIG. 5. Referring to FIGS. 5 and 6, in this embodiment, the first sheet 122 has at least one clamping hole 1221, the second sheet 124 has at least one clamping pillar 1241, and the clamping pillar 1241 is clamped to the clamping hole 1221 so that the first sheet 122 and the second sheet 124 are fixed to each other. The front end of the clamping pillar 1241 has an inclined shape, and thus may be easily inserted from the bottom to the top into the clamping hole 1221 of the first sheet 122, and it becomes difficult for the front end of the clamping pillar 1241 to come out from the top to the bottom after insertion, thereby allowing the clamped state to be maintained. In other embodiments, the first sheet 122 and the second sheet 124 may be clamped to each other through other types of structures, and the present disclosure is not limited thereto.

As above, in the battery core module according to the present disclosure, a first electrode, a second electrode, and a thermal cut-off are installed between the first sheet and the second sheet that are clamped and fixed to each other. By doing so, the first electrode, the second electrode, and the thermal cut-off may be desirably protected, and the first sheet and the second sheet are clamped to each other and then fixed to the end portion through a clamping force onto the end portion of the battery core module, thereby allowing very simple assembly.

### Reference Signs

100: battery core module
110: battery unit
112: battery body
1121: end portion
114: first electrode
1141: first conductive element
1142: second conductive element
116: second electrode
118: thermal cut-off
120: anti-collision structure
122: first sheet
1221: clamping hole
122a: bent portion
124: second sheet
1241: clamping pillar

## Claims

1. A battery core module, comprising:
a battery unit including a battery body, a first electrode, a second electrode and a thermal cut-off, wherein the battery body has an end portion, wherein the first electrode, the second electrode and the thermal cut-off are disposed at the end portion, and wherein the thermal cut-off is connected to the first electrode, and
an anti-collision structure including a first sheet and a second sheet, wherein the end portion, a part of the first electrode, a part of the second electrode and the thermal cut-off are installed between the first sheet and the second sheet, and wherein the first sheet and the second sheet are clamped and fixed to each other.

2. The battery core module according to claim 1,
wherein the first sheet has a bent portion to form an accommodation space, and the thermal cut-off is located within the accommodation space.

3. The battery core module according to claim 1,
wherein the first sheet and the second sheet are made of an insulating material.

4. The battery core module according to claim 1,
wherein the first sheet has at least one clamping hole, the second sheet has at least one clamping pillar, and the at least one clamping pillar is clamped and fixed to the at least one clamping hole.

5. The battery core module according to claim 1,
wherein the first electrode includes a first conductive element and a second conductive element, the first conductive element is connected between one end of the thermal cut-off and the battery body, the second conductive element is connected to the other end of the thermal cut-off, and a part of the first conductive element and a part of the second conductive element are installed between the first sheet and the second sheet.

6. The battery core module according to claim 5,
wherein the first conductive element is bent and extends onto the first sheet.

7. The battery core module according to claim 1,
wherein the first sheet is made of TPU (Thermoplastic Polyurethane).

8. The battery core module according to claim 5,
wherein the first conductive element is bent to extend onto the first sheet based on a side surface of the first sheet.

9. The battery core module according to claim 4,
wherein a front end of the clamping pillar has an inclined shape.
